# FASCICULE DE BREVET EUROPEEN

(11) **EP 2 300 308 B1**
(45) Date de publication et mention de la délivrance du brevet: **05.12.2012**
(21) Numéro de dépôt: 09784275.1
(22) Date de dépôt: 17.07.2009
(51) Int. Cl.: B62K 5/04, B60G 21/00

(54) **DISPOSITIF MECANIQUE DE CONTROLE D'INCLINAISON**
MECHANISCHE VORRICHTUNG ZUR NEIGUNGSSTEUERUNG
MECHANICAL DEVICE FOR INCLINATION CONTROL

(30) Priorité: 21.07.2008 FR 0804137; 12.05.2009 FR 0902271
(43) Date de publication de la demande: 30.03.2011
(73) Titulaire: Veleance, 13590 Meyreuil (FR)
(72) Inventeur: QUEMERE, Jacques, F-13950 Cadolive (FR); GAILLARD-GROLEAS, Jérôme, F-13090 Aix-en-Provence (FR)
(74) Mandataire: Renaud-Goud, Thierry
(86) Numéro de dépôt international: PCT/FR2009/000878
(87) Numéro de publication internationale: WO 2010/010245

(56) Documents cités:
- EP-A- 0 601 982
- WO-A-97/27071
- WO-A-2004/011324
- WO-A-2005/075278
- WO-A-2006/130007
- DE-A1- 3 718 858
- US-A- 4 743 000
- US-A1- 2005 016 086
- US-A1- 2007 262 549

## Description

La présente invention concerne un dispositif mécanique de contrôle d'inclinaison.

Il s'agit donc de contrôler l'inclinaison d'un cadre mobile articulé sur un châssis. Ce problème se pose en particulier sur les tricycles qui connaissent maintenant un fort développement.

Un tricycle comporte essentiellement en tant que châssis un essieu à deux roues, un cadre dont une extrémité supporte la troisième roue et une articulation qui relie l'autre extrémité de ce cadre à l'essieu.

Afin d'améliorer la sécurité et le confort, il est connu de forcer le cadre à s'incliner dans les virages.

Ainsi, le document WO 2004/011324 propose un tricycle dont l'inclinaison du cadre est motorisée au moyen d'un vérin à double effet. Les deux extrémités de ce vérin sont reliées l'une à l'essieu et l'autre au cadre inclinable. La commande du vérin est réalisée en fonction de la force exercée par le conducteur du tricycle sur un palonnier agencé sur l'essieu.

Il apparaît que ce tricycle n'apporte pas la sécurité requise à vitesse élevée en courbes. En effet, le cadre qui est soumis à la force centrifuge essentiellement due à la masse du conducteur tend à s'incliner vers l'extérieur du virage.

Une telle position du cadre rend la conduite délicate, voire dangereuse. De plus, le conducteur peut être amené malgré lui à commander l'inclinaison du cadre dans le mauvais sens.

Le document WO 2006/130007 décrit lui aussi un tricycle dont l'inclinaison est motorisée. La commande de cette motorisation prend en compte un capteur de vitesse, un capteur de direction et un capteur d'accélération latérale. Elle est prévue pour privilégier l'accélération latérale à l'arrêt ou à basse vitesse alors qu'à vitesse élevée, c'est le capteur de direction qui prédomine. Là encore l'inclinaison du cadre n'est pas réellement contrôlée à vitesse élevée.

La motorisation de l'inclinaison contrarie la conduite naturelle car elle impose cette inclinaison plutôt que de laisser agir les phénomènes physiques que sont la pesanteur et la force centrifuge. De plus, elle consomme de l'énergie pour fixer l'inclinaison du cadre, ce qui est très pénalisant dans le cas des véhicules écologiques à très basse consommation et semble donc pratiquement inapplicable dans le cas d'un véhicule non motorisé à propulsion humaine. En outre, le système complet de commande de l'inclinaison présente une certaine complexité, ce qui est un handicap certain pour le coût du véhicule.

Ainsi, le document FR 2 825 672, qui divulgue les caractéristiques du préambule de la revendication 1, rapporte une solution pour limiter le risque d'inclinaison à contre-sens. Le tricycle comporte un essieu disposé à l'arrière, un cadre qui supporte la roue avant directrice et une articulation pour raccorder le cadre à l'essieu. Mais ici, l'articulation est passive, le cadre est libre de s'incliner selon la résultante des forces qui lui sont appliquées. Ce tricycle comporte de plus un moyen de blocage de l'articulation qui est commandé par un organe pendulaire. Le but recherché est ici d'éviter un basculement du cadre à l'arrêt ou à vitesse très basse et le mécanisme est donc désactivé dès que la vitesse excède un seuil prédéterminé. L'organe pendulaire présente une structure mécanique complexe et peut amener un blocage brutal du cadre.

La présente invention a ainsi pour objet un dispositif adapté à une articulation passive non motorisée qui permet de contrôler l'inclinaison d'un cadre relativement à un châssis lorsque la vitesse est relativement élevée.

Selon l'invention, ce dispositif comporte :
- un châssis,
- un cadre inclinable,
- une articulation passive permettant l'inclinaison du cadre relativement au châssis,
- un moyen de blocage de l'articulation ;
de plus, ce dispositif comporte :
- un accéléromètre pour mesurer l'accélération transverse à laquelle le cadre inclinable est soumis, et
- un circuit de commande pour activer le moyen de blocage lorsque l'accélération transverse excède un seuil prédéterminé.

L'accélération transverse est nulle lorsque le cadre est en équilibre dynamique, que le tricycle se déplace en ligne droite ou en courbe. Par équilibre dynamique, on entend une inclinaison du cadre qui correspond à la résultante de l'accélération radiale et de la pesanteur. Par contre, cette accélération transverse est d'autant plus importante que le cadre s'écarte de l'équilibre dynamique en courbe. Ainsi, le dispositif de l'invention interdit tout mouvement inopiné du cadre au-delà d'une certaine vitesse et, éventuellement, il limite son inclinaison.

Suivant une première option, le moyen de blocage est agencé entre ce châssis et le cadre inclinable.

Suivant une deuxième option, le châssis étant déformable, le dispositif comporte un axe de référence, le moyen de blocage étant agencé entre cet axe de référence et le cadre inclinable.

Suivant une troisième option, le châssis étant encore déformable, le moyen de blocage est agencé entre deux éléments de ce châssis disposés de part et d'autre du cadre inclinable.

A titre d'exemple, le châssis étant du type à doubles triangles superposés, le moyen de blocage est agencé entre un bras d'un triangle supérieur et un bras d'un triangle inférieur, ces deux triangles étant disposés de part et d'autre du cadre inclinable.

Selon un mode de réalisation préférentiel, le moyen de blocage est un vérin à double effet disposé entre le châssis et le cadre inclinable.

Avantageusement, les deux chambres du vérin à double effet sont reliées par deux canalisations unidirectionnelles de sens opposés comportant chacune une vanne.

A titre d'exemple, les canalisations unidirectionnelles comportent chacune un clapet anti-retour.

Alternativement, les deux chambres du vérin à double effet sont reliées par une canalisation unique comportant une seule vanne.

De préférence, le circuit de commande est agencé pour, lorsque l'accélération transverse excède un seuil prédéterminé, fermer celle des vannes qui autorise un déplacement du vérin dans le sens de cette accélération.

Ainsi, on interdit au cadre de s'éloigner de la position d'équilibre dynamique mais on lui permet de s'en rapprocher.

Suivant une caractéristique additionnelle de l'invention, le circuit de commande est agencé pour déterminer l'ouverture de la vanne en fonction du module de l'accélération transverse.

Cette caractéristique permet d'assurer un blocage progressif de l'articulation en évitant chocs ou à-coups.

De plus, si le circuit de commande dispose de la vitesse longitudinale de ce dispositif, il est agencé pour déterminer l'ouverture de la vanne en fonction du module de cette vitesse longitudinale.

De la sorte, le dispositif est pratiquement inopérant à basse vitesse.

De surcroît, le circuit de commande est agencé pour fermer complètement la vanne lorsque le module de la vitesse longitudinale est compris dans une plage prédéterminée.

Par ailleurs, le circuit de commande est agencé pour ouvrir complètement les deux vannes lorsque le module de la vitesse longitudinale est nul, soit inférieur à un seuil prédéterminé.

Suivant une autre caractéristique additionnelle de l'invention, le circuit de commande comporte un organe de filtrage disposé en aval de l'accéléromètre.

Il s'agit ici de filtrer les mouvements erratiques du cadre inclinable.

Le dispositif trouve une application particulièrement avantageuse lorsqu'il équipe un véhicule, notamment un tricycle.

La présente invention apparaîtra maintenant avec plus de détails dans le cadre de la description qui suit d'exemples de réalisation donnés à titre illustratif en se référant aux figures annexées qui représentent :
- la figure 1, une vue schématique de face d'un tricycle à châssis rigide équipé du dispositif de contrôle d'inclinaison,
- la figure 2, un schéma d'une articulation, plus précisément :
   - la figure 2a, une vue d'une patte de fixation,
   - la figure 2b, une vue de cette articulation,
   - la figure 2c, une vue d'une platine de fixation,
- la figure 3, un schéma d'un moyen de blocage,
- la figure 4, une variante du moyen de blocage ci-dessus,
- la figure 5, un schéma en perspective de trois-quarts avant d'un châssis déformable,
- la figure 6, un schéma de ce châssis en vue de face arrière, plus précisément :
   - la figure 6a, châssis au repos,
   - la figure 6b, châssis soumis à un pompage,
- la figure 7, un schéma d'un châssis déformable en vue de face avant, plus précisément :
   - la figure 7a, cadre vertical,
   - la figure 7b, cadre incliné,
- la figure 8, un schéma en perspective de trois-quarts avant d'un châssis déformable pourvu d'un axe de référence vertical,
- la figure 9, un schéma en perspective de trois-quarts avant d'un châssis déformable pourvu d'un axe de référence horizontal, et
- la figure 10, un schéma d'un châssis déformable en vue de face avant.

Les éléments présents dans plusieurs figures sont affectés d'une seule et même référence.

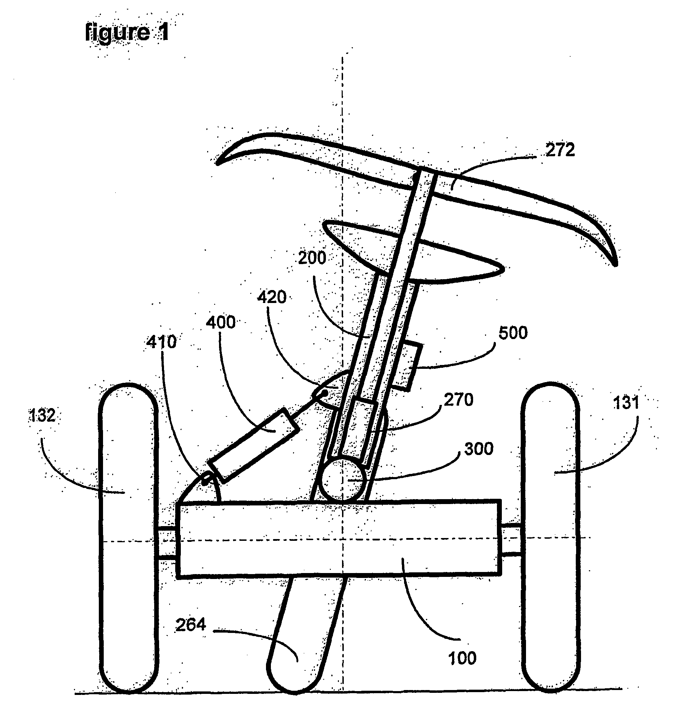

En référence à la figure 1, un tricycle comporte essentiellement un essieu avant directeur 100, un cadre inclinable 200 et une articulation 300 qui permet la rotation du cadre par rapport à l'essieu.

L'essieu 100 se présente comme un châssis rectangulaire qui joint la roue avant gauche 131 et la roue avant droite 132. Le cadre 200 est analogue à celui d'une bicyclette. La fourche arrière sur laquelle est fixée la roue arrière 264 n'apparaît pas. Le tube de direction 270 est agencé sur le cadre 200.

Un moyen de blocage 400 est agencé entre deux ancrages, le premier 410 solidaire du châssis 100 et le second 420 solidaire du cadre 200. Ces ancrages permettent le pivotement des extrémités du moyen de blocage 400 de sorte que sa position soit coordonnée avec celle du cadre 200.

Un accéléromètre 500 est fixé sur le cadre 200, étant entendu qu'il mesure l'accélération de ce cadre dans la direction qui est perpendiculaire à son plan. Cet accéléromètre pourrait être disposé ailleurs.

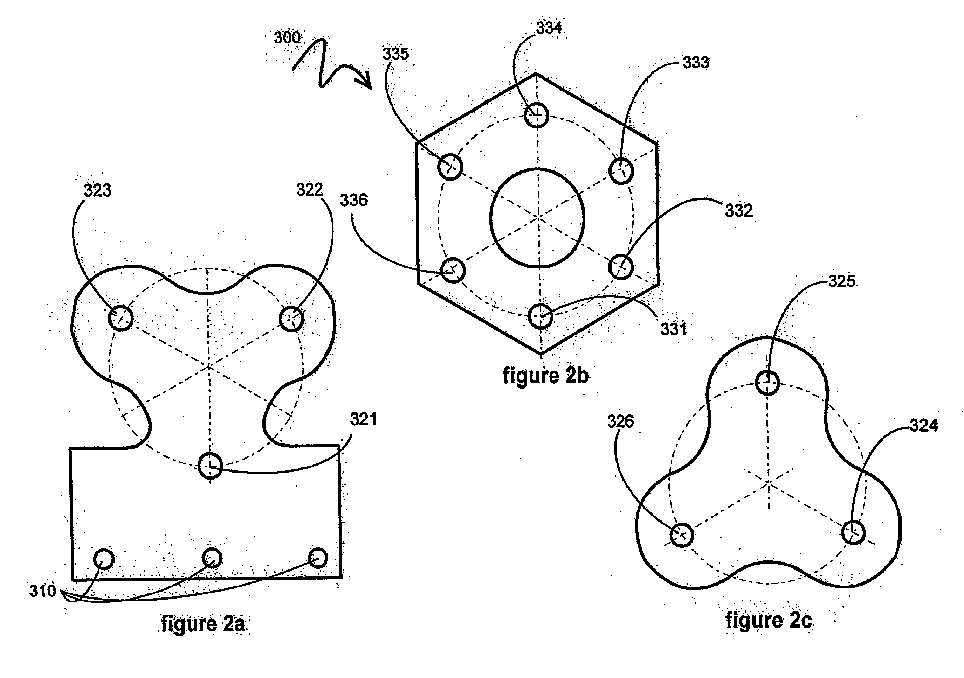

En référence à la figure 2 un mode de réalisation préférentiel de l'articulation 300 est détaillé.

Sur la figure 2a, la patte de fixation comporte trois trous 310 destinés à sa fixation sur le support solidaire de l'essieu 100. Elle comporte également un premier 321, un second 322 et un troisième 323 orifices disposés à 120° par référence au centre du cercle sur lequel ils figurent.

Sur la figure 2b, une platine de fixation 281 qui est montée à l'extrémité du cadre 200 comporte un quatrième 324, un cinquième 325 et un sixième 326 orifices disposés à 120° par référence au centre du cercle sur lequel ils figurent, ce cercle ayant même diamètre que le cercle sur lequel figurent les trois orifices 321, 322, 323 de la patte de fixation.

Sur la figure 2c, l'articulation proprement dite 300 est un élément élastique en caoutchouc qui présente deux faces sensiblement parallèles. Il est ici évidé en son centre pour augmenter son élasticité radiale. Il comporte successivement une première 331, une seconde 332, une troisième 333, une quatrième 334, une cinquième 335 et une sixième 336 ouvertures qui débouchent sur chacune de ses deux faces et dont les axes sont perpendiculaires à ces mêmes faces.

Ces six ouvertures cylindriques sont disposées à 60° par référence au centre du cercle sur lequel elles figurent, ce cercle ayant même diamètre que ceux sur lesquels figurent les orifices 321, 322, 323 de la patte de fixation et les orifices 324, 325, 326 de la platine de fixation. A titre d'exemple, on peut retenir comme articulation 300 un accouplement élastique commercialisé sous la marque déposée JUBOFLEX par la société PAULSTRA domiciliée 61 rue Marius Aufan, 92305 Levallois-Perret, France.

L'articulation 300 est fixée à la patte de fixation au moyen de trois boulons qui traversent l'un, le premier orifice 321 et la première ouverture 331, le deuxième, le deuxième orifice 322 et la troisième ouverture 333, et le troisième, le troisième orifice 323 et la cinquième ouverture 335. De même, un quatrième boulon traverse le quatrième orifice 324 ainsi que la deuxième ouverture 332, un cinquième boulon traverse le cinquième orifice 325 et la quatrième ouverture 334, alors qu'un sixième boulon traverse le sixième orifice 326 et la sixième ouverture 336.

On peut imaginer bien d'autres articulations. Par exemple, une articulation élastique peut consister en un tube interne et un tube externe, ces deux tubes concentriques étant liés par une couronne d'élastomère ou de tout autre matériau élastique. Les deux éléments à coupler sont solidarisés l'un au tube interne et l'autre au tube externe.

Un point important est que l'articulation oppose une relative résistance à la rotation relative des deux éléments qu'il relie. Autrement dit, cette articulation doit présenter une résistance à la rotation. Ainsi, un simple plot cylindrique doté d'une certaine élasticité fixé d'une part à la patte de fixation et d'autre part à la platine de fixation peut tenir ce rôle.

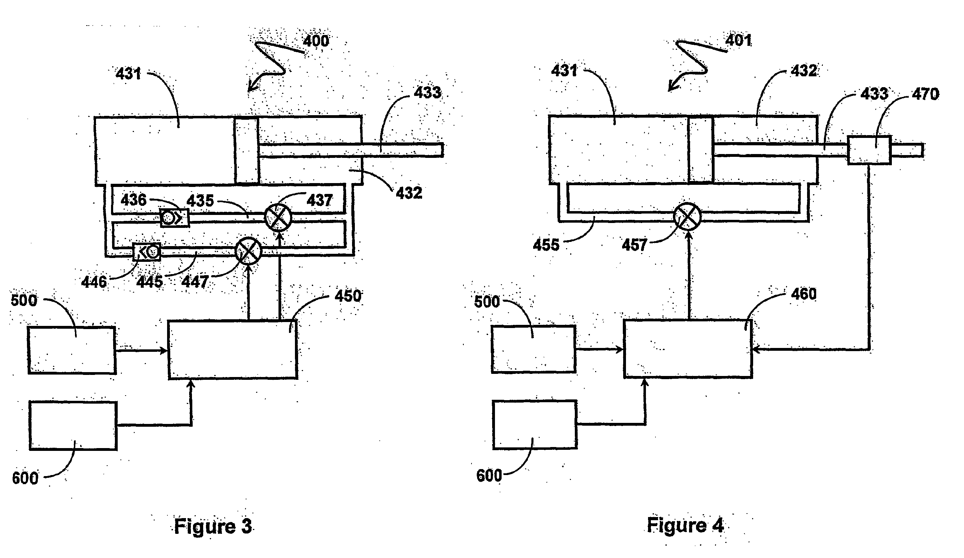

En référence à la figure 3, un mode de réalisation préférentiel de l'organe de blocage 400 est présenté. Il s'agit d'un vérin à double effet dont la première chambre 431 est disposée du côté du châssis 100 et dont la deuxième chambre 432 ainsi que l'axe 433 sont du côté du cadre 200.

Une première canalisation 435 permet au fluide de s'écouler uniquement de la première 431 vers la seconde 432 chambre. De même, une deuxième canalisation 445 permet au fluide de s'écouler uniquement de la seconde 432 vers la première 431 chambre.

La première 435, respectivement la seconde 445 canalisation, comporte un premier 436, respectivement un second 446, clapet anti-retour pour assurer un sens unique de déplacement du fluide. Par ailleurs, la première 435, respectivement la seconde 445 canalisation comporte une première 437, respectivement une seconde vanne 447.

Un circuit de commande 450 tel qu'un microcontrôleur commande les vannes en réponse au signal de sortie de l'accéléromètre qui mesure donc l'accélération transverse du cadre dans la direction perpendiculaire à son plan.

Lorsque le cadre est à l'équilibre dynamique, c'est-à-dire lorsque l'accélération transverse est nulle, le microcontrôleur 450 commande l'ouverture des vannes.

Lorsque le module de l'accélération transverse excède un seuil prédéterminé, deux cas peuvent se présenter.

Si cette accélération est positive, c'est-à-dire si le cadre est trop incliné par rapport à la position d'équilibre, le circuit de commande 450 ferme la deuxième vanne 447 et laisse la première vanne 437 ouverte, ceci dans le cas d'un virage à gauche. Ainsi le vérin ne peut plus s'allonger, mais il a la faculté de se rétracter. Naturellement, dans le cas d'un virage à droite, la commande des deux vannes 437, 447 est inversée.

Si par contre le cadre 200 est insuffisamment incliné par rapport à la position d'équilibre, le circuit de commande 450 ferme la première vanne 437 et laisse la seconde 447 ouverte. Ainsi, le vérin peut s'allonger mais il ne peut pas se rétracter.

Pour obtenir un fonctionnement fluide du moyen de blocage et éviter un freinage trop brutal du cadre, les deux vannes 437, 447 ne fonctionnent pas en tout-ou-rien mais présentent plutôt une ouverture variable. Le circuit de commande 450 détermine l'ouverture de ces vannes en fonction du module de l'accélération transverse. A titre d'exemple, cette fonction est linéaire, l'obturation totale de la vanne étant commandée pour une accélération égale ou supérieure à une valeur fixée.

Il convient de remarquer que l'on peut utiliser un accéléromètre deux axes, ces axes tous deux dans un plan perpendiculaire au cadre 200 étant l'un dans le plan du cadre et l'autre perpendiculaire à ce cadre.

L'angle du vecteur accélération dans le repère orthonormé défini par les deux axes du capteur reflète ainsi directement l'écart angulaire par rapport à la position d'équilibre dynamique. Cet écart angulaire peut servir de référence au circuit de commande 450 à la place du module de l'accélération transverse car il s'agit là d'un moyen équivalent.

Accessoirement, un capteur de vitesse 600 fournit la vitesse longitudinale du dispositif au circuit de commande 450. Celui-ci inhibe le moyen de blocage lorsque cette vitesse est nulle ou très basse, c'est-à-dire qu'il laisse les deux vannes 437, 447 complètement ouvertes. On évite ainsi de contrarier les mouvements erratiques du cadre, notamment au démarrage du véhicule.

Il est également possible de prévoir un verrouillage de l'inclinaison du cadre, par exemple pour une utilisation en terrain accidenté. A cet effet une information est adressée au circuit de commande 450 de sorte qu'il commande l'obturation totale des deux vannes 437, 447.

Il est également préférable de prévoir un organe de filtrage au sein du circuit de commande 450 pour éviter une commande intempestive des vannes 437, 447 suite à l'apparition d'une accélération transverse erratique. On minimise ainsi l'effet des vibrations ou des aspérités de la chaussée. Cet organe, un filtre passe-bas par exemple, est disposé à la sortie de l'accéléromètre 500. On filtre également les régimes transitoires qui se présentent notamment à vitesse réduite ou en entrée et en sortie de courbe ; on stabilise le fonctionnement en évitant des oscillations de l'asservissement.

Le moyen de blocage exposé ci-dessus a pour avantage de présenter une consommation d'énergie extrêmement réduite car les seuls éléments actifs sont les vannes 437, 447.

En référence à la figure 4, une variante 401 du moyen de blocage est présentée encore dans le domaine de l'hydraulique.

On reprend le même vérin à double effet avec ces deux chambres 431, 432 et son axe 433. Maintenant, une unique canalisation 455 permet au fluide de s'écouler selon le cas uniquement de la première 431 vers la seconde 432 chambre ou de la seconde 432 vers la première 431 chambre. Cette canalisation comporte une seule électrovanne 457.

Un capteur d'effort 470 tel qu'une jauge de contrainte est agencé sur l'axe 433 du vérin pour mesurer l'effort longitudinal auquel est soumis cet axe.

Un microprocesseur 460 commande l'électrovanne 457 en réponse au signal de sortie du capteur d'effort 470.

Le microcontrôleur 470 commande l'ouverture de l'électrovanne lorsque le cadre est à l'équilibre dynamique, c'est-à-dire lorsque l'accélération transverse est nulle. Il fait de même lorsque la combinaison des signaux de sortie du capteur d'effort 470 et de l'accéléromètre 500 indique que le cadre tend à se rapprocher de l'équilibre dynamique. Par contre, il commande la fermeture de l'électrovanne 457 lorsque la combinaison des signaux de sortie du capteur d'effort 470 et de l'accéléromètre 500 indique le cadre tend à s'éloigner de l'équilibre dynamique.

Toujours dans le domaine de l'hydraulique, on peut envisager l'emploi d'un vérin magnéto-rhéologique. Le fluide circulant dans un tel vérin est chargé de particules ferromagnétiques si bien que sa viscosité est fonction du champ magnétique auquel il est soumis. On peut donc faire varier la résistance à l'écoulement du fluide en utilisant un électroaimant.

L'invention s'applique cependant à tout autre mode de réalisation du moyen de blocage pourvu que sa fonction soit de contrôler l'inclinaison d'un cadre 200.

A titre d'exemple, on peut prévoir un frein, du type embrayage, à commande électrique, situé dans l'axe de l'articulation 300, ce frein prenant la forme de deux disques concentriques dont l'axe est celui de cette articulation.

D'autres solutions sont également disponibles pour l'homme du métier. Il suffit d'adapter la commande compte tenu de l'enseignement de la présente invention.

Indépendamment du moyen de blocage, il peut être judicieux de limiter l'inclinaison du cadre 200 au moyen de butées mécaniques (non représentées) dans une plage qui s'étend typiquement de - 30° à + 30°.

Il apparaît ainsi que l'invention s'applique dans le cas où le châssis est rigide. Elle s'applique également dans le cas d'un châssis déformable.

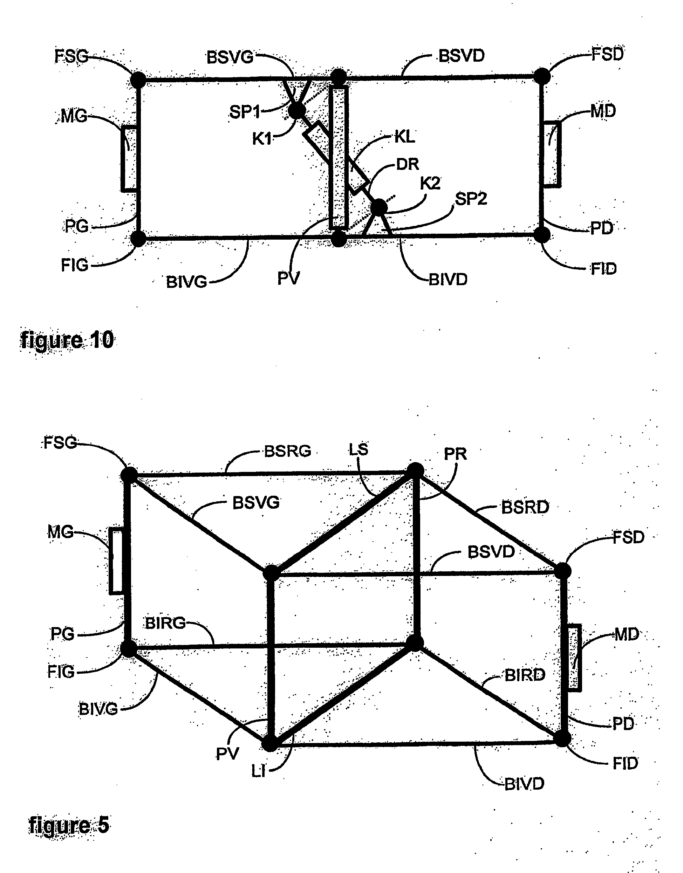

En référence à la figure 5, on prendra pour exemple une épure de suspensions à roues indépendantes par doubles triangles superposés.

Le châssis s'articule sur une ossature rigide qui constitue le prolongement du cadre inclinable et qui lui est donc coplanaire. Le cadre inclinable n'est pas représenté car il est identique à celui qui a été précédemment décrit. On considère donc maintenant que cette ossature fait partie intégrante du cadre.

L'ossature a une structure rectangulaire et comporte donc un longeron supérieur LS, un longeron inférieur LI, une poutre arrière PR qui réunit les deux longerons du côté du cadre et une poutre avant PV qui les réunit du côté opposé, à l'avant du véhicule.

Un triangle supérieur droit qui a pour base le longeron supérieur LS comporte un bras supérieur avant droit BSVD et un bras supérieur arrière droit BSRD, ces deux bras étant reliés à un point de fixation supérieur droit FSD.

Un triangle inférieur droit qui a pour base le longeron inférieur LI comporte un bras inférieur avant droit BIVD et un bras inférieur arrière droit BIRD, ces deux bras étant reliés à un point de fixation inférieur droit FID.

Une poutrelle droite PD est agencée entre les points de fixation supérieur droit FSD et inférieur droit FID. Cette poutrelle supporte le moyeu droit MD.

Naturellement, les bras sont articulés sur l'ossature et sur la poutrelle droite.

Un triangle supérieur gauche qui a pour base le longeron supérieur LS comporte un bras supérieur avant gauche BSVG et un bras supérieur arrière gauche BSRG, ces deux bras étant reliés à un point de fixation supérieur gauche FSG.

Un triangle inférieur gauche qui a pour base le longeron inférieur LI comporte un bras inférieur avant gauche BIVG et un bras inférieur arrière gauche BIRG, ces deux bras étant reliés à un point de fixation inférieur gauche FIG.

Une poutrelle gauche PG est agencée entre les points de fixation supérieur gauche FSG et inférieur gauche FIG. Cette poutrelle supporte le moyeu gauche MG.

Naturellement, les bras sont articulés sur l'ossature et sur la poutrelle gauche.

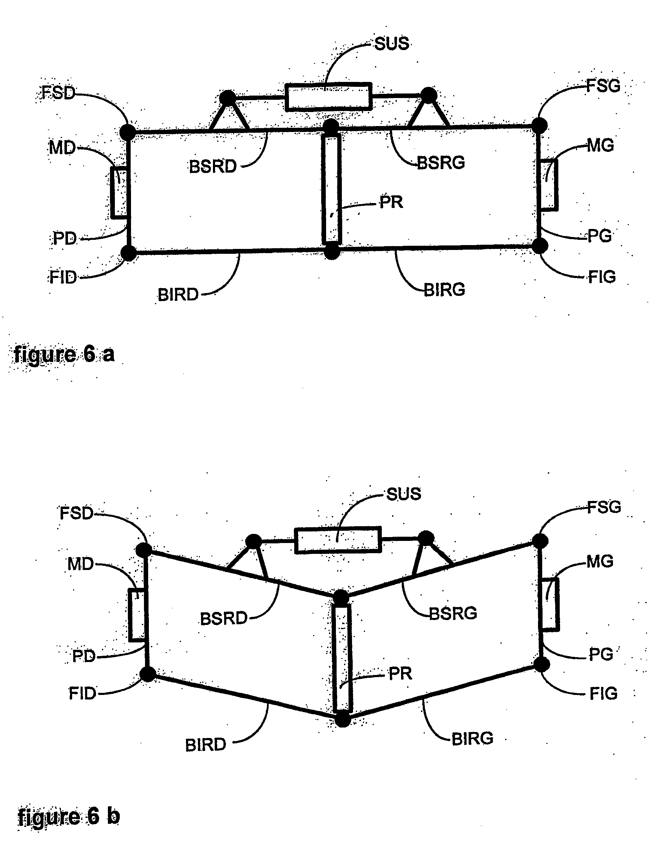

Sur la figure 6a, le châssis est représenté au repos en vue de face arrière. Une suspension SUS (non représentée dans la figure 5) est articulée entre le bras supérieur arrière droit BSRD et le bras supérieur arrière gauche BSRG. Cette suspension SUS est un combiné ressort-amortisseur.

Le châssis présente ainsi deux parallélogrammes déformables. Le parallélogramme arrière gauche est formé par le bras supérieur arrière gauche BSRG, la poutrelle gauche PG, le bras inférieur arrière gauche BIRG et la poutre arrière PR. Le parallélogramme arrière droit est formé par le bras supérieur arrière droit BSRD, la poutrelle droite PD, le bras inférieur droit BIRD et la poutre arrière PR.

Sur la figure 6b, homologue de la figure 6a, le châssis est vu sous le même angle lorsqu'il est soumis à une déformation symétrique qualifiée de pompage.

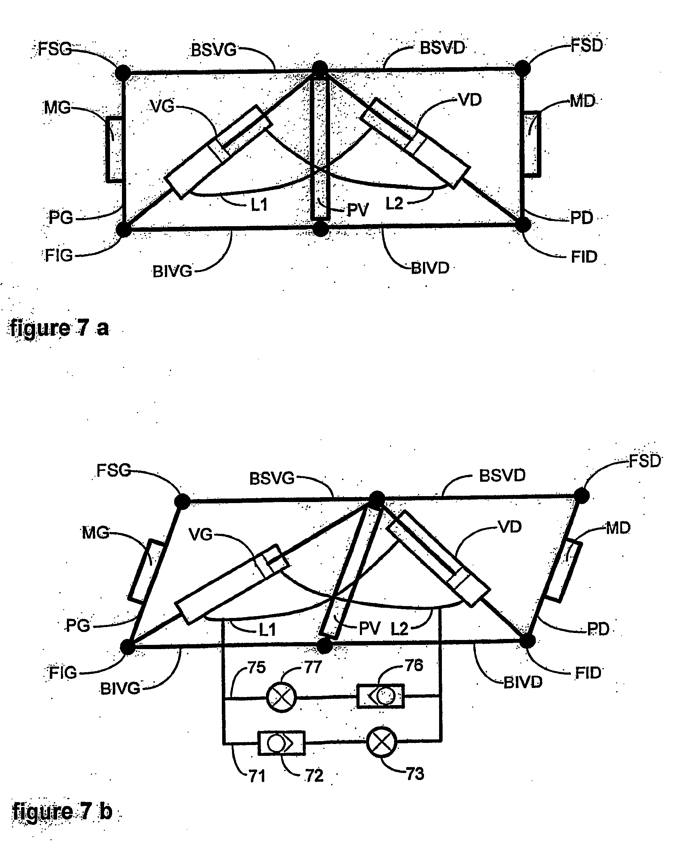

En référence à la figure 7a, le châssis est représenté au repos en vue de face avant.

Le châssis présente ainsi à nouveau deux parallélogrammes déformables. Le parallélogramme avant gauche est formé par le bras supérieur avant gauche BSVG, la poutrelle gauche PG, le bras inférieur avant gauche BIVG et la poutre avant PV. Le parallélogramme avant droit est formé par le bras supérieur avant droit BSVD, la poutrelle droite PD, le bras inférieur droit BIVD et la poutre avant PV.

Le moyen de blocage est toujours agencé entre le châssis et le cadre. Il est composé d'un module gauche VG et d'un module droit VD disposés symétriquement dans les deux parallélogrammes avant.

Le module gauche VG est agencé sur la diagonale du parallélogramme avant gauche qui a pour origine le point de fixation inférieur gauche FIG.

Le module droit VD est agencé sur la diagonale du parallélogramme avant droit qui a pour origine le point de fixation inférieur droit FID.

Les deux modules VG, VD sont dans le cas présent des vérins à double effet. Selon la manière dont ils sont commandés, ils peuvent agir sur le pompage et/ou sur l'inclinaison du cadre.

Dans le cas d'un pompage à inclinaison nulle, les deux vérins se raccourcissent ou s'allongent simultanément dans la même proportion.

En reliant les chambres opposées des deux vérins, le pompage est affecté uniquement en amortissement. On peut maîtriser cet amortissement en jouant sur la section des canalisations qui raccordent les deux vérins, MD, MG. Il s'ensuit que la fonction d'amortissement de la suspension SUS peut être omise, cette suspension se réduisant alors à un simple ressort.

A contrario, dans cette configuration, l'inclinaison du cadre est interdite car les chambres des vérins qui sont reliées sont soumises simultanément soit à une surpression, soit à une dépression.

En référence à la figure 7b, on peut cependant contrôler l'inclinaison de cadre. Une première conduite 71 permet au fluide de s'écouler uniquement de la première L1 vers la deuxième L2 liaison. De même, une deuxième conduite 75 permet au fluide de s'écouler uniquement de la seconde L2 vers la première L1 liaison.

La première 71, respectivement la seconde 75 conduite, comporte un premier 72, respectivement un second 74, clapet anti-retour pour assurer un sens unique de déplacement du fluide. Par ailleurs, la première 71, respectivement la seconde 75 conduite comporte une première 73, respectivement une seconde 77 vanne.

Il est prudent de prévoir un réservoir de compensation (non représenté) dans le circuit hydraulique pour pallier toute dissymétrie, pratique courante de l'homme du métier.

La commande des vannes se fait de manière analogue à celle décrite en référence à la figure 3. Elle permet l'amortissement, le freinage ou le blocage de l'inclinaison du cadre.

Bien que le châssis soit déformable, on se ramène au cas du châssis rigide car le moyen de blocage est ancré aux points fixes de ce châssis que sont les points de fixation inférieur gauche FIG et droit FID.

Il ne s'agit cependant pas là d'un impératif.

D'autres solutions peuvent conduire à un découplage amélioré entre la suspension et le contrôle de l'inclinaison.

Une première solution consiste à définir un axe de référence qui soit immobile tant en cas de pompage qu'en cas d'inclinaison du cadre. Il faut en effet une référence pour estimer l'inclinaison.

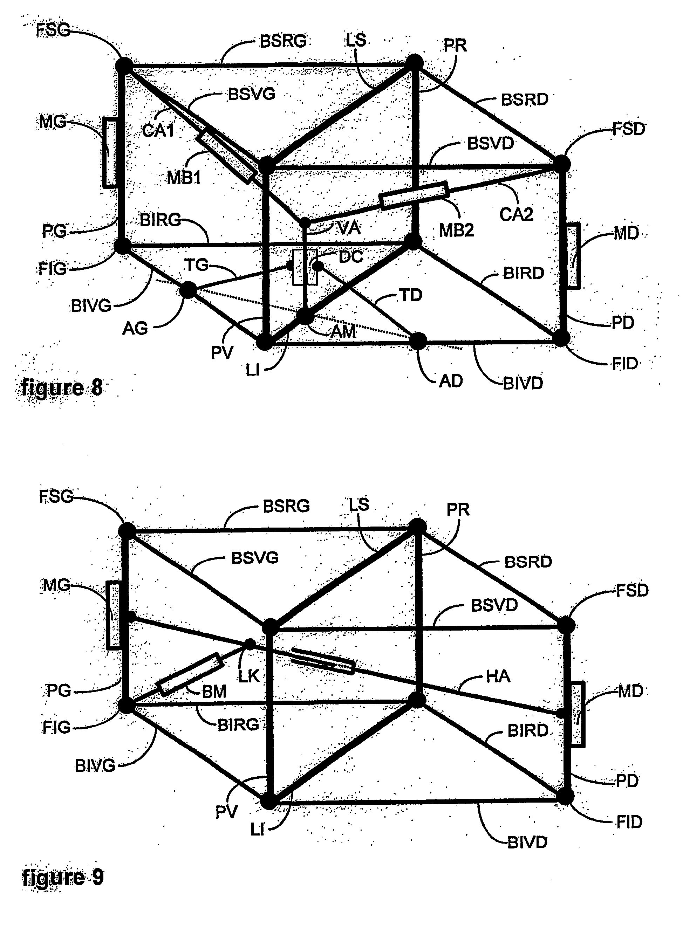

En référence à la figure 8, on définit un axe de référence vertical. Cet axe est vertical dans le cas où le plan d'appui des roues est horizontal. Par vertical, on entend donc orthogonal à l'axe des roues.

A cet effet, on prévoit un point d'ancrage gauche AG sur le bras inférieur avant gauche BIVG, un point d'ancrage droit AD sur le bras inférieur avant droit BIVD et un point d'ancrage médian AM situé sur le longeron inférieur LI. Ces trois points d'ancrage AG, AD, AM figurent dans un même plan vertical, et les points d'ancrage gauche AG et droit AD sont équidistants du longeron inférieur LI.

Un axe vertical VA est articulé à sa première extrémité sur le point d'ancrage médian AM et à sa seconde extrémité sur un axe de contrôle CA par ailleurs articulé au point de fixation supérieur gauche FSG.

Une douille DC est montée coulissante sur l'axe vertical VA.

Une traverse gauche TG est articulée d'une part sur le point d'ancrage gauche AG et d'autre part sur cette douille DC. De même, une traverse TD est articulée d'une part sur le point d'ancrage droit AD et d'autre part sur la douille DC. Les deux traverses TG, TD ont la même longueur, si bien que, compte tenu de la coplanarité des trois points d'ancrage AG, AD, AM, l'axe vertical est effectivement constamment perpendiculaire à l'axe des roues.

Un premier moyen de blocage MB1 est ici prévu sur l'axe de contrôle CA1 qui relie un premier point de fixation supérieur gauche FSG au sommet de l'axe vertical VA. Ainsi, une quelconque inclinaison induit une variation de longueur de l'axe de contrôle CA et la maîtrise de cette inclinaison peut être menée comme exposé plus haut.

On peut éventuellement symétriser l'agencement en prévoyant un second axe de contrôle CA2 sur lequel est monté un second moyen de blocage MB2. Ce second axe de contrôle CA2 est articulé entre le sommet de l'axe vertical VA et le point de fixation supérieur droit FSD.

En référence à la figure 9, on définit un axe de référence horizontal. Par horizontal, on entend colinéaire à l'axe des roues. En effet, si l'on peut estimer l'inclinaison par référence à un axe vertical, on peut également le faire par référence à un axe horizontal. Cet axe horizontal HA est articulé entre la poutre gauche PG et la poutre droite PD. Il est télescopique pour accommoder la variation de distance entre ces deux poutres due au pompage. A titre d'exemple, la section droite de cet axe HA est pourvue d'un manchon à son extrémité opposée à celle qui figure sur la poutre droite PD. La section gauche de cet axe HA se présente comme une tige dont l'extrémité opposée à celle qui figure sur la poutre gauche PG coulisse dans ce manchon. L'axe horizontal HA est naturellement perpendiculaire à l'ossature rigide LS, PR, LI, PV.

Dans le cas présent, le moyen de blocage BM figure sur une tige articulée entre le point de fixation inférieur gauche FIG et un point d'attache LK disposé sur la section droite de l'axe horizontal HA.

Il apparaît ainsi que l'on peut estimer l'inclinaison du cadre par rapport à la verticale ou à l'horizontale. Il s'ensuit que l'on peut aussi l'estimer par référence à un axe fixe quelconque orthogonal à ce cadre.

On peut également contrôler l'inclinaison en se référençant à deux éléments du châssis déformable qui subissent des mouvements opposés.

En référence à la figure 10, le châssis est à nouveau vu de face. Le moyen de blocage KL est maintenant agencé sur une barre DR articulée entre un premier K1 et un second K2 points de liaison. Le premier point de liaison K1 figure au sommet d'un premier support SP1 fixé sous le bras supérieur avant gauche BSVG.

Le deuxième point de liaison K2 au sommet d'un second support SP2 fixé sur le bras inférieur avant droit BIVD. Les points de liaison K1, K2 sont équidistants tant de la poutre avant PV que des bras respectifs auxquels ils sont rattachés. Ils sont ainsi disposés que les segments de droite qui les relient au longeron supérieur soit orthogonaux à la barre DR. Il s'agit là d'une disposition permettant d'augmenter le découplage entre la suspension et le contrôle d'inclinaison.

En effet, au premier ordre, la distance entre les deux points de liaison K1, K2 est pratiquement invariante en cas de pompage alors qu'elle est sensiblement modifiée en cas d'inclinaison substantielle.

On indiquera à nouveau que dans le cas généralement adopté dans le présent document où le moyen de blocage KL est un vérin à double effet, celui-ci se commande encore comme cela a été explicité en référence à la figure 3.

On rappelle également que, comme dans le cas d'un châssis fixe, le moyen de blocage n'est pas limité au seul vérin et peut ici aussi prendre une forme quelconque tel qu'un frein. A titre d'exemple, ce frein prend place soit dans l'articulation qui figure entre le cadre inclinable et l'axe de référence, soit entre deux éléments du châssis déformable soumis à des mouvements opposés.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention. En particulier, tout moyen décrit peut être remplacé par un moyen équivalent sans sortir du cadre de la présente invention.

## Revendications

1. Dispositif comportant:
- un châssis (100 ; PG-PD),
- un cadre inclinable (200 ; PV-PR),
- une articulation passive (300 ; BIRG-BIRD) permettant l'inclinaison dudit cadre relativement audit châssis,
- un moyen de blocage (400, MG, MD, MB1, MB2, BM, KL) de ladite articulation,
**caractérisé en ce qu'**il comporte de plus :
- un accéléromètre (500) pour mesurer l'accélération transverse à laquelle ledit cadre inclinable (200 ; PV-PR) est soumis, et
- un circuit de commande (450) pour activer ledit moyen de blocage lorsque ladite accélération transverse excède un seuil prédéterminé.

2. Dispositif selon la revendication 1, **caractérisé en ce que** ledit moyen de blocage (400, MG, MD) est agencé entre ce châssis (100 ; PG-PD) et ledit cadre inclinable (200 ; PV-PR).

3. Dispositif selon la revendication 1, **caractérisé en ce que** ledit châssis (PG-PD) étant déformable, il comporte un axe de référence (VA ; HA), ledit moyen de blocage (MB1, MB2 ; BM) étant agencé entre cet axe de référence et ledit cadre inclinable (PV-PR).

4. Dispositif selon la revendication 1, **caractérisé en ce que** ledit châssis (PG-PD) étant déformable, ledit moyen de blocage (KL) est agencé entre deux éléments de ce châssis (BSVG, BIVD) disposés de part et d'autre dudit cadre inclinable (PV-PR).

5. Dispositif selon la revendication 4 **caractérisé en ce que**, ledit châssis (PG-PD) étant du type à doubles triangles superposés, ledit moyen de blocage (KL) est agencé entre un bras (BSVG) d'un triangle supérieur et un bras (BIVD) d'un triangle inférieur, ces deux triangles étant disposés de part et d'autre dudit cadre inclinable (PV-PR).

6. Dispositif selon l'une quelconque des revendications précédentes, **caractérisé en ce que** ledit moyen de blocage est un vérin à double effet (400, 401, MG, MD, MB1, MB2, BM, KL).

7. Dispositif selon la revendication 6, **caractérisé en ce que** les deux chambres (431, 432) dudit vérin à double effet (400) sont reliées par deux canalisations unidirectionnelles (435, 445) de sens opposés comportant chacune une vanne (437, 447).

8. Dispositif selon la revendication 7, **caractérisé en ce que** lesdites canalisations unidirectionnelles (435, 445) comportent chacune un clapet anti-retour (436, 446).

9. Dispositif selon l'une quelconque des revendications 3 à 5, **caractérisé en ce que** les deux chambres (431, 432) dudit vérin à double effet (401) sont reliées par une canalisation unique (455) comportant une seule vanne (457).

10. Dispositif selon l'une quelconque des revendications 6 à 9, **caractérisé en ce que** ledit circuit de commande (450) est agencé pour, lorsque ladite accélération transverse excède un seuil prédéterminé, fermer celle desdites vannes (437, 447, 457) qui autorise un déplacement dudit vérin (400, 401) dans le sens de cette accélération.

11. Dispositif selon la revendication 10, **caractérisé en ce que** ledit circuit de commande (450) est agencé pour déterminer l'ouverture de ladite vanne (437, 447, 457) en fonction du module de ladite accélération transverse.

12. Dispositif selon la revendication 11 **caractérisé en ce que**, ledit circuit de commande (450) disposant de plus de la vitesse longitudinale (600) de ce dispositif, il est agencé pour déterminer l'ouverture de ladite vanne (437, 447, 457) en fonction du module de ladite vitesse longitudinale.

13. Dispositif selon la revendication 12 **caractérisé en ce que**, ledit circuit de commande (450) est agencé pour fermer complètement ladite vanne (437, 447, 457) lorsque le module de ladite vitesse longitudinale est compris dans une plage prédéterminée.

14. Dispositif selon l'une quelconque des revendications 12 ou 13, **caractérisé en ce que** ledit circuit de commande (450) est agencé pour ouvrir complètement la ou les vannes (437, 447, 457) lorsque le module de ladite vitesse longitudinale est nul, soit inférieur à un seuil prédéterminé.

15. Dispositif selon l'une quelconque des revendications précédentes, **caractérisé en ce que** ledit circuit de commande (450) comporte un organe de filtrage disposé en aval dudit accéléromètre (500).

16. Véhicule équipé d'un dispositif conforme à l'une quelconque des revendications précédentes.

17. Véhicule selon la revendication 12, caractérisé en que c'est un tricycle.

## Claims

1. A device comprising:
• a box (100; PG-PD);
• a tilting frame (200; PV-PR);
• a passive joint (300; BIRG-BIRD) allowing tilting of said frame relative to said box; and
• means (400, MG, MD, MB1, MB2, BM, KL) for locking said joint;
the device being **characterized in that** it further comprises:
• an accelerometer (500) for measuring the transverse acceleration to which said tilting frame (200; PV-PR) is subjected; and
• a control circuit (450) for activating said locking means if said transverse acceleration exceeds a predetermined threshold.

2. A device according to claim 1, **characterized in that** said locking means (400, MG, MD) are arranged between the box (100; PG-PD) and said tilting frame (200; PV-PR).

3. A device according to claim 1, **characterized in that** said box (PG-PD) is deformable, and the device includes a reference rod (VA; HA), said locking means (MB1, MB2; BM) being arranged between that reference rod and said tilting frame (PV-PR).

4. A device according to claim 1, **characterized in that**, said box (PG-PD) is deformable, and said locking means (KL) are arranged between two elements (BSVG, BIVD) of this box disposed at either end of said tilting frame (PV-PR).

5. A device according to claim 4, **characterized in that**, said box (PG-PD) is of the superposed double-triangle type, and said locking means (KL) are arranged between an arm (BSVG) of an upper triangle and an arm (BIVD) of a lower triangle, these two triangles being disposed at either end of said tilting frame (PV-PR).

6. A device according to any preceding claim, **characterized in that** said locking means comprise a double-acting actuator (400, 401, MG, MD, MB1, MB2, BM, KL).

7. A device according to claim 6, **characterized in that** the two chambers (431, 432) of said double-acting actuator (400) are connected by two unidirectional pipes (435, 445) in opposite directions each including a valve (437, 447).

8. A device according to claim 7, **characterized in that** each of said unidirectional pipes (435, 445) includes a check valve (436, 446).

9. A device according to any one of claims 3 to 5, **characterized in that** the two chambers (431, 432) of said double-acting actuator (401) are connected by a single pipe (455) including a single valve (457).

10. A device according to any one of claims 6 to 9, **characterized in that** said control circuit (450) is adapted, if said transverse acceleration exceeds a predetermined threshold, to close that one of said valves (437, 447, 457) that authorizes movement of said actuator (400, 401) in the direction of that acceleration.

11. A device according to claim 10, **characterized in that** said control circuit (450) is adapted to determine the opening of said valve (437, 447, 457) as a function of the modulus of said transverse acceleration.

12. A device according to claim 11, **characterized in that**, said control circuit (450) also having access to the longitudinal speed (600) of the device, it is adapted to determine the opening of said valve (437, 447, 457) as a function of the modulus of said longitudinal speed.

13. A device according to claim 12, **characterized in that** said control circuit (450) is adapted to close said valve (437, 447, 457) completely if the modulus of said longitudinal speed is in a predetermined range.

14. A device according to claim 12 or claim 13, **characterized in that** said control circuit (450) is adapted to open the valve or valves (437, 447, 457) completely if the modulus of said longitudinal speed is zero or below a predetermined threshold.

15. A device according to any preceding claim, **characterized in that** said control circuit (450) includes a filter downstream of said accelerometer (500).

16. A vehicle equipped with a device according to any preceding claim.

17. A vehicle according to claim 12, **characterized in that** it is a tricycle.

## Patentansprüche

1. Vorrichtung, die aufweist:
- ein Fahrgestell (100; PG-PD),
- einen neigbaren Rahmen (200; PV-PR),
- ein passives Gelenk (300; BIRG-BIRD), das die Neigung des Rahmens bezüglich des Fahrgestells erlaubt,
- eine Blockiereinrichtung (400, MG, MD, MB1, MB2, SM, KL) des Gelenks,
**dadurch gekennzeichnet, dass** sie außerdem aufweist:
- einen Beschleunigungsmesser (500), um die Querbeschleunigung zu messen, der der neigbare Rahmen (200; PV-PR) ausgesetzt ist, und
- eine Steuerschaltung (450), um die Blockiereinrichtung zu aktivieren, wenn die Querbeschleunigung eine vorbestimmte Schwelle überschreitet.

2. Vorrichtung nach Anspruch 1, **dadurch gekennzeichnet, dass** die Blockiereinrichtung (400, MG, MD) zwischen diesem Fahrgestell (100; PG-PD) und dem neigbaren Rahmen (200; PV-PR) angeordnet ist.

3. Vorrichtung nach Anspruch 1, **dadurch gekennzeichnet, dass** sie bei verformbarem Fahrgestell (PG-PD) eine Bezugsachse (VA; HA) aufweist, wobei die Blockiereinrichtung (MB1, MB2; BM) zwischen dieser Bezugsachse und dem neigbaren Rahmen (PV-PR) angeordnet ist.

4. Vorrichtung nach Anspruch 1, **dadurch gekennzeichnet, dass** bei verformbarem Fahrgestell (PG-PD) die Blockiereinrichtung (KL) zwischen zwei Elementen dieses Fahrgestells (BSVG, BIVD) angeordnet ist, die sich zu beiden Seiten des neigbaren Rahmens (PV-PR) befinden.

5. Vorrichtung nach Anspruch 4, **dadurch gekennzeichnet, dass** bei einem Fahrgestell (PG-PD) von der Art mit übereinander angeordneten Doppeldreiecken die Blockiereinrichtung (KL) zwischen einem Schenkel (BSVG) eines oberen Dreiecks und einem Schenkel (BIVD) eines unteren Dreiecks angeordnet ist, wobei diese zwei Dreiecke sich zu beiden Seiten des neigbaren Rahmens (PV-PR) befinden.

6. Vorrichtung nach einem der vorhergehenden Ansprüche, **dadurch gekennzeichnet, dass** die Blockiereinrichtung ein doppeltwirkender Zylinder (400, 401, MG, MD, MB1, MB2, BM, KL) ist.

7. Vorrichtung nach Anspruch 6, **dadurch gekennzeichnet, dass** die zwei Kammern (431, 432) des doppeltwirkenden Zylinders (400) durch zwei unidirektionale Rohrleitungen (435, 445) entgegengesetzter Richtungen verbunden sind, die je ein Ventil (437, 447) aufweisen.

8. Vorrichtung nach Anspruch 7, **dadurch gekennzeichnet, dass** die unidirektionalen Rohrleitungen (435, 445) je ein Rückschlagventil (436, 446) aufweisen.

9. Vorrichtung nach einem der Ansprüche 3 bis 5, **dadurch gekennzeichnet, dass** die zwei Kammern (431, 432) des doppeltwirkenden Zylinders (401) durch eine einzige Rohrleitung (455) verbunden sind, die ein einziges Ventil (457) aufweist.

10. Vorrichtung nach einem der Ansprüche 6 bis 9, **dadurch gekennzeichnet, dass** die Steuerschaltung (450) eingerichtet ist, um, wenn die Querbeschleunigung eine vorbestimmte Schwelle überschreitet, dasjenige der Ventile (437, 447, 457) zu schießen, das eine Verschiebung des Zylinders (400, 401) in Richtung dieser Beschleunigung erlaubt.

11. Vorrichtung nach Anspruch 10, **dadurch gekennzeichnet, dass** die Steuerschaltung (450) eingerichtet ist, um die Öffnung des Ventils (437, 447, 457) abhängig vom Modul der Querbeschleunigung zu bestimmen.

12. Vorrichtung nach Anspruch 11, **dadurch gekennzeichnet, dass** sie, da die Steuerschaltung (450) zudem über die Längsgeschwindickeit (600) dieser Vorrichtung verfügt, eingerichtet ist, um die Öffnung des Ventils (437, 447, 457) abhängig vom Modul der Längsgeschwindigkeit zu bestimmen.

13. Vorrichtung nach Anspruch 12, **dadurch gekennzeichnet, dass** die Steuerschaltung (450) eingerichtet ist, um das Ventil (437, 447, 457) vollständig zu schließen, wenn der Modul der Längsgeschwindigkeit in einem vorbestimmten Bereich liegt.

14. Vorrichtung nach einem der Ansprüche 12 oder 13, **dadurch gekennzeichnet, dass** die Steuerschaltung (450) eingerichtet ist, um das oder die Ventile (437, 447, 457) vollständig zu öffnen, wenn der Modul der Längsgeschwindigkeit Null ist, oder unter einer vorbestimmten Schwelle liegt.

15. Vorrichtung nach einem der vorhergehenden Ansprüche, **dadurch gekennzeichnet, dass** die Steuerschaltung (450) ein Filterorgan aufweist, das hinter dem Beschleunigungsmesser (500) angeordnet ist.

16. Fahrzeug, das mit einer Vorrichtung nach einem der vorhergehenden Ansprüche ausgestattet ist.

17. Fahrzeug nach Anspruch 12, **dadurch gekennzeichnet, dass** es ein dreirädriges Fahrzeug ist.
